# DEMANDE DE BREVET EUROPEEN

(11) **EP 2 681 985 A1**
(43) Date de publication de la demande: **08.01.2014**
(21) Numéro de dépôt: 13175000.2
(22) Date de dépôt: 04.07.2013
(51) Int. Cl.: A01D 43/077, A01D 43/063

(54) **Equipement de collecte d'un produit, berceau et porte-outil pour cet équipement**

(30) Priorité: 05.07.2012 FR 1256468
(71) Demandeur: VRS (Société Villettoise Redressage et Soudure), 38280 Villette d'Anthon (FR); Robert, Frédéric, 69470 Genas (FR)
(72) Inventeur: Robert, Frédéric, 69470 Genas (FR); Falcoz, Martial, 38280 Villette d'Anthon (FR)
(74) Mandataire: Colombo, Michel

(57) **Abrégé**

Cet équipement de collecte d'un produit comporte :
- un tracteur (4) équipé d'un attelage trois-points,
- un porte-outil (50) comprenant un berceau (52) équipé d'un cadre (56) dit « vertical » et d'une attache trois-points attelée sur l'attelage trois-points du tracteur,
- un outil (76) apte à rejeter le produit collecté, fixé au berceau du porte-outil.

Le berceau (52) comporte également une plate-forme (58), fixée au cadre vertical (56) et s'étendant en porte-à-faux au-dessus du sol à partir de ce cadre. Le porte-outil (50) comporte un réservoir (54) de récolte reçu à l'intérieur d'un logement (72) formé dans cette plate-forme et supporté au-dessus du sol uniquement par cette plate-forme, ce qui permet de fixer l'outil et le réservoir sur le même attelage trois-points.

## Description

L'invention concerne un équipement de collecte d'un produit ainsi qu'un berceau et un porte-outil pour cet équipement.

Ces équipements sont, par exemple, utilisés pour réaliser des travaux d'entretien des bas-côtés d'une chaussée tels que la tonte des bords d'une route ou l'élagage d'arbre à proximité d'une route. Dans ce cas, le produit collecté est de l'herbe coupée et/ou des branches hachées.

Des équipements connus de collecte d'un produit comportent :
- un tracteur équipé d'un attelage trois-points, l'attelage trois-points comportant deux bras de levage mus par un système hydraulique et un bras central, les extrémités de chaque bras de levage étant munies d'un point d'attelage extérieur et l'extrémité du bras central étant munie d'un point d'attelage central, ces points d'attelage étant aptes à coopérer avec des points d'attache respectifs d'une attache trois-point d'un outil à atteler pour fixer cet outil sur l'attelage trois-points,
- un porte-outil suspendu au-dessus du sol, ce porte-outil comprenant un berceau équipé :
   - d'un cadre dit « vertical »,
   - d'une attache trois-points fixée sur ce cadre vertical, cette attache trois-points étant apte à être attelée, de façon détachable, sur l'attelage trois-points du tracteur, cette attache comportant à cet effet deux points d'attache extérieurs et un point d'attache central aptes à être mécaniquement raccordés, respectivement, aux points d'attelage extérieurs et au point d'attelage central de l'attelage trois-points du tracteur, et
   - d'au moins un point d'attelage, de façon détachable, d'un outil,
- un outil apte à rejeter le produit collecté, cet outil étant fixé audit au moins un point d'attelage du berceau du porte-outil,
- un réservoir de récolte du produit rejeté par l'outil.

De l'état de la technique est également connu des documents suivants : WO923438, DE9111081, US6533042, EP0676128 et FR2559020.

Dans les équipements connus, puisque l'attelage trois points du tracteur est déjà occupé pour fixer l'outil qui rejette le produit collecté, le réservoir de récolte est monté sur une remorque indépendante tractée par le tracteur. A cet effet, la remorque comporte au moins un essieu et des roues pour rouler sur le sol. La remorque est attachée au tracteur par l'intermédiaire d'un crochet ou d'une barre d'attelage.

A cause de cette remorque, certaines manoeuvres sont difficiles ou dangereuses à exécuter au bord d'une route. C'est par exemple le cas d'une marche arrière sur le bord d'une route. En effet, il existe souvent des zones non carrossées à proximité de la remorque telles qu'un fossé ou similaire et la remorque peut tomber dedans. La présence de la remorque pose également d'autres problèmes de sécurité. Par exemple, elle peut gêner la visibilité du conducteur du tracteur lors des manoeuvres. Cette remorque est aussi encombrante.

L'invention vise à remédier à cet inconvénient en proposant un équipement plus simple à manoeuvrer tout en restant capable de remplir les mêmes fonctions. Elle a donc pour objet équipement de collecte d'un produit dans lequel :
- le berceau comporte également une plate-forme, fixée sans aucun degré de liberté au cadre vertical et s'étendant en porte-à-faux au-dessus du sol à partir de ce cadre, et
- le porte-outil comporte le réservoir de récolte reçu à l'intérieur d'un logement formé dans cette plate-forme et supporté au-dessus du sol uniquement par cette plate-forme.

Dans l'équipement ci-dessus, le porte-outil permet de transporter à la fois l'outil et le réservoir de récolte. Ainsi, il n'est plus nécessaire que le réservoir soit monté sur une remorque équipée de ses propres roues pour être tractée par le tracteur. L'équipement ci-dessus est donc beaucoup plus facile à manoeuvrer qu'un tracteur tractant sur une remorque le réservoir de récolte surtout lors de manoeuvre telle qu'une marche arrière.

De plus, comme l'outil et le réservoir sont transportés en utilisant qu'un seul attelage trois-points du tracteur, il est toujours possible de fixer sur l'autre attelage trois-points du tracteur d'autres outils comme dans les équipements connus. Cette équipement peut donc adopter les mêmes configurations que les équipements connus et peut donc remplir exactement les mêmes fonctions. Il permet donc de conserver la polyvalence de l'équipement.

L'invention concerne également un berceau conforme à la revendication 2.

Les modes de réalisation de ce berceau peuvent comporter une ou plusieurs des caractéristiques des revendications dépendantes 3 à 5.

Ces modes de réalisation du berceau présentent en outre les avantages suivants :
- fixer les points d'attache de l'outil directement sur le cadre vertical permet de réduire la masse en porte-à-faux puisque le poids de l'outil s'exerce alors dans un même plan parallèle et très proche du plan contenant les trois points d'attelage de l'attelage trois-points du tracteur ;
- le fait que les trois points d'attelage soient disposés de la même manière que les points d'attelage de l'attelage trois-points du tracteur permet de monter sur le berceau des outils uniquement conçus initialement pour être directement montés sur l'attelage trois-points du tracteur, on conserve ainsi une grande polyvalence dans le choix des outils qui peuvent être montés sur le porte-outil;
- décaler les trois points d'attelage du berceau vers le haut par rapport aux trois points d'attache de ce même berceau permet de diminuer l'encombrement du berceau tout en optimisant la position de l'outil par rapport au réservoir de récolte ;

L'invention concerne également un porte-outil pour cet équipement conforme à la revendication 6.

Les modes de réalisation de ce porte-outil peuvent comporter une ou plusieurs des caractéristiques des revendications 7 à 10.

Ces modes de réalisation du porte-outil présentent en outre les avantages suivants :
- l'utilisation d'un réservoir basculable entre une position de collecte et une position déversée permet de vider simplement ce réservoir ;
- fixer l'articulation du porte-outil qui permet de faire basculer le réservoir entre sa position de collecte et sa position déversée à l'extrémité supérieure des ridelles permet d'élever l'axe de l'articulation bien au-dessus du sol, ce qui facilite le déversement du réservoir, par exemple, dans la benne d'un autre véhicule.

L'invention sera mieux comprise à la lecture de la description qui va suivre, donnée uniquement à titre d'exemple non limitatif et faite en se référant aux dessins sur lesquels :
- la figure 1 est une illustration schématique en vue de côté d'un équipement de collecte d'un produit,
- la figure 2 est une illustration schématique, en vue de côté, d'un porte-outil de l'équipement de la figure 1,
- les figures 3 et 4 sont des illustrations schématique, en vue de côté, d'un réservoir de récolte du porte-outil de la figure 2, respectivement, dans une position de collecte et dans une position déversée ;
- les figures 5 et 6 sont des illustrations schématiques en perspective d'un berceau du porte-outil de la figure 2 ;
- les figures 7 et 8 sont des illustrations schématiques en vue de côté de deux autres agencements possibles de l'équipement de la figure 1.

Dans ces figures, les mêmes références sont utilisées pour désigner les mêmes éléments.

Dans la suite de cette description, les caractéristiques et fonctions bien connues de l'homme du métier ne sont pas décrites en détail.

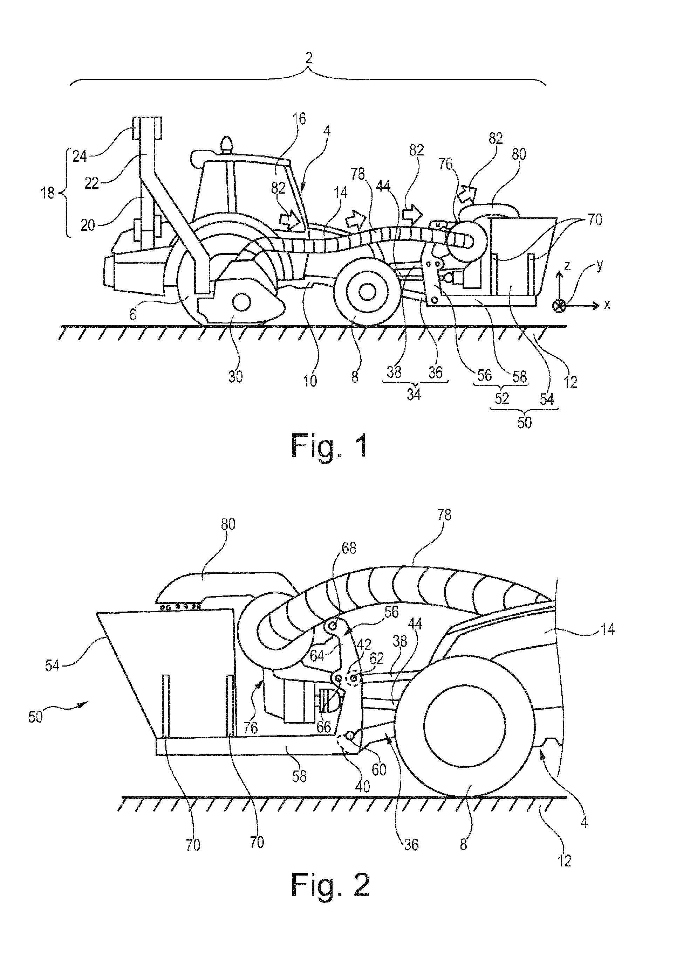

La figure 1 représente un équipement 2 de collecte d'un produit. Dans cet exemple de mode de réalisation, le produit collecté est de l'herbe ou des branchettes se trouvant sur les bords d'une route.

A cet effet, l'équipement comporte un tracteur agricole 4. Le tracteur 4 est équipé de deux roues arrière 6 et de deux roues avant 8 de diamètre plus petit. Sur la figure 1, seule une roue arrière 6 et une roue avant 8 sont visibles. Le tracteur 4 comporte également une cabine 16 de conduite.

Ces roues supportent un châssis 10 au-dessus d'un sol 12. Ici, le sol 12 est sensiblement parallèle à un plan horizontal parallèle à des directions orthogonales X et Y. La direction X est parallèle à la direction de déplacement du tracteur 4. La direction verticale Z est perpendiculaire aux directions X et Y. Dans la suite de cette description, les termes « supérieur », « inférieur », « haut », « bas », « au-dessus » et « au-dessous » sont définis par rapport à cette direction Z.

Les roues arrière et/ou les roues avant sont entraînées en rotation par un moteur 14 du tracteur pour permettre au tracteur de rouler sur le sol 12.

Ici, l'arrière du tracteur 4 comprend un bras articulé 18 raccordé mécaniquement au châssis 10 du tracteur 4 par l'intermédiaire d'un attelage trois-points arrière. Sur la figure 1, cet attelage trois-points arrière n'est pas visible.

Le bras 18 comprend une flèche rigide 20 dont une extrémité proximale est mécaniquement raccordée au châssis 10 par l'intermédiaire d'une liaison pivot. Le bras 18 comprend également un balancier 22 dont une extrémité est reliée mécaniquement par une liaison pivot 24 à l'extrémité distale de la flèche 20.

L'extrémité opposée du balancier 22 comporte un mécanisme de fixation permettant de fixer et d'actionner différents outils sur cette extrémité. Le balancier 22 peut-être télescopique.

Le bras 18 est actionné par plusieurs vérins commandables non représentés.

Dans ce mode de réalisation, un outil 30 de fauchage, tel qu'une faucheuse-débroussailleuse vendue par la société Noremat®, est fixé à l'extrémité distale du balancier 22. Ici, l'outil 30 est suspendu au-dessus du sol 12 pour tondre de l'herbe.

L'avant du tracteur 4 comprend également un attelage trois-points 34. Cet attelage 34, comme l'attelage trois-points arrière du tracteur 4, est, par exemple, conformes à la norme ISO730 : 2009 ou à l'une de ses révisions. Ces attelages ne sont donc que brièvement décrits.

L'attelage 34 comprend :
- deux bras 36 de levage, et
- un bras central 38.

Typiquement, les bras de levage 36 sont symétriques l'un par rapport à l'autre par rapport à un plan vertical dans lequel s'étend principalement le bras 38. Ces bras de levage 36 sont mobiles et actionnés par un système hydraulique commandable non représenté. Chacune de leur extrémité libre comporte un point d'attelage extérieur 40 visible en pointillé sur la figure 2.

Le bras central 38 est généralement également mobile. Toutefois, en général, il n'est pas actionné par un système hydraulique. L'extrémité libre du bras 38 comporte un point 42 d'attelage central visible en pointillé sur la figure 2. Par exemple, les points 40 et 42 forment les sommets d'un triangle dans lequel les deux points 40 forment la base du triangle et le point 42 son sommet supérieur. La longueur de la base de ce triangle est typiquement comprise entre 80 cm et 1,50 m et la hauteur de ce triangle est typiquement comprise entre 80 cm et 1,50 m.

La partie avant du tracteur 4 comprend également un arbre 44 d'entraînement d'un outil. L'arbre 44 est entraîné en rotation, par exemple, par le moteur 14 du tracteur 4.

Un porte-outil 50 est fixé, sans aucun degré de liberté, sur l'attelage 34. Ce porte-outil 50 est représenté plus en détail sur la figure 2. Il comporte un berceau mécanique 52 ainsi qu'un réservoir 54 de récolte.

Le berceau 52 comprend un cadre 56 et une plate-forme 58 horizontale.

Le cadre 56 est dit « vertical » car il s'étend principalement dans un plan vertical perpendiculaire à la direction X. Ce cadre 56 comporte trois points d'attache tournés vers l'extérieur. Deux de ces points d'attache, portant la référence numérique 60, sont aptes à être mécaniquement raccordés, respectivement, au point d'attelage 40. Le dernier de ces points d'attache, portant la référence numérique 62, est apte à être mécaniquement raccordé au point d'attelage 42. Le raccordement mécanique entre les points 60 et 62 et les points 40 et 42 est un raccordement mécanique réversible permettant le montage du porte-outil 50 sur l'attelage 34 et, en alternance, le démontage du porte-outil 50 de l'attelage 34. Par exemple, les points 60 et 62 sont mécaniquement raccordés aux points d'attelage, respectivement, 40 et 42 à l'aide de goupilles amovibles.

Le cadre 56 comporte, dans la direction verticale, au-dessus du point 62 un prolongement 64. Ce prolongement 64 comporte trois points d'attelage tournés vers l'intérieur du berceau 52. Les deux points d'attelage inférieurs, portant la référence numérique 66, sont symétriques l'un de l'autre par rapport à un plan vertical passant par un point d'attelage central portant la référence numérique 68. De préférence, le plan de symétrie des points d'attelage 66 est confondu avec le plan de symétrie des points d'attelage 40.

Les points 66 et 68 sont disposés les uns par rapport aux autres et conformés de manière à permettre l'attelage sur ces points, directement, des mêmes outils que ceux qui peuvent être montés directement sur l'attelage trois-points 34. On conserve ainsi la polyvalence des outils puisqu'ils peuvent être directement montés sur les attelages trois-points du tracteur et, en alternance, directement sur les points 66 et 68 du porte-outil.

La plate-forme 58 est fixée sans aucun degré de liberté à l'extrémité inférieure du cadre 56. Cette plate-forme 58 s'étend principalement dans un plan horizontal appelé « plan de la plate-forme ». La plate-forme 58 est en porte-à-faux au-dessus du sol 12 et ne touche pas le sol 12. Elle est donc transportée sans aucun contact avec le sol autre que ceux établis par l'intermédiaire des roues 6 et 8 du tracteur 4.

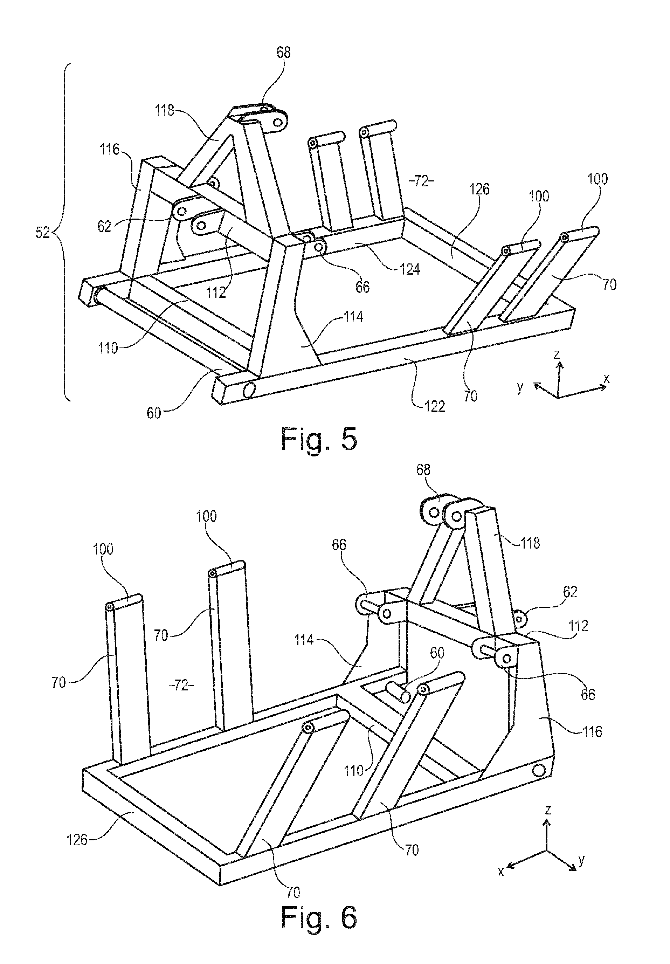

Des ridelles 70 s'étendant vers le haut sont fixées des deux côtés de la plate-forme 58 pour définir un logement creux 72 (voir figures 5 et 6) dans lequel est reçu le réservoir 54. Typiquement, ces ridelles 70 sont en métal.

Dans ce mode de réalisation, un outil est fixé sans aucun degré de liberté sur les points d'attelage 66, 68. Ici, cet outil est un aspirateur 76 apte à aspirer l'herbe coupée par l'outil 30 de fauchage et à rejeter l'herbe aspirée dans le réservoir 54. A cet effet, l'aspirateur 76 est raccordé par l'intermédiaire d'un conduit d'aspiration 78 à l'outil 30 de fauchage et par l'intermédiaire d'un conduit 80 de refoulement au réservoir 54. Sur la figure 1, le sens de circulation de l'herbe coupée à l'intérieur des conduits 78 et 80 est représenté par des flèches 82. L'aspirateur 76 est mécaniquement raccordé à l'arbre 44 pour être actionné par le tracteur 4.

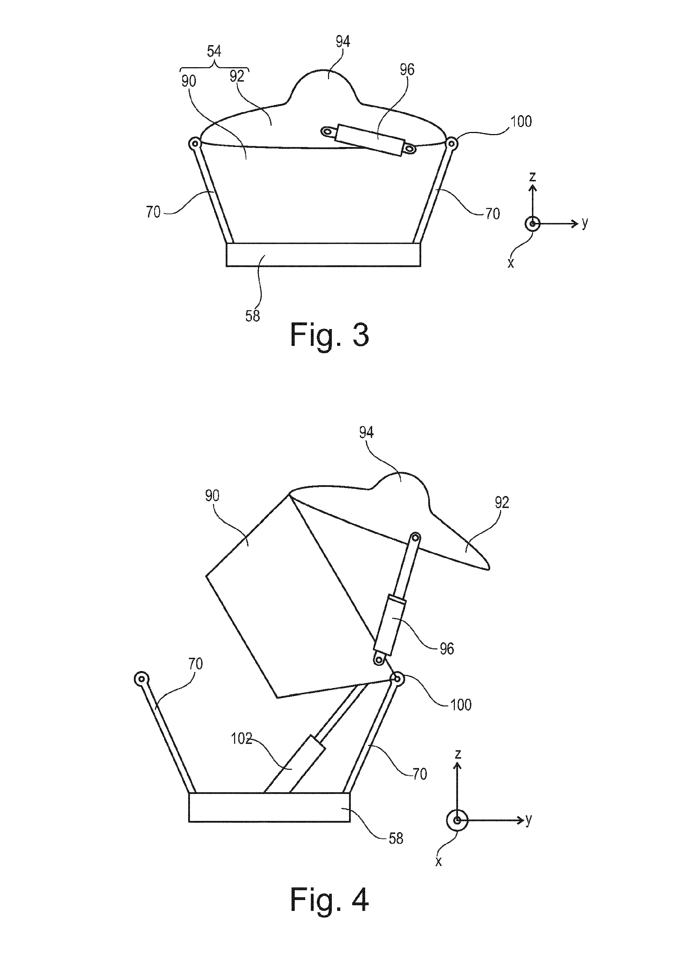

Les figures 3 et 4 représentent plus en détail le réservoir 54. Ce réservoir 54 comprend un bac de collecte 90 et un couvercle 92. Le couvercle 92 est monté pivotable sur un bord supérieur du bac 90 parallèle à la direction X entre une position ouverte (représentée sur la figure 4) et une position fermée (représentée sur la figure 3). Dans la position fermée, le couvercle 92 empêche l'herbe coupée de ressortir du bac 90. Dans la position ouverte, au contraire, l'herbe coupée peut être retirée du bac 90.

Ici, le couvercle 92 comporte un canal 94 de guidage de l'herbe coupée fluidiquement raccordé à l'extrémité du conduit 80 de refoulement de l'aspirateur 76.

Le réservoir 54 comporte également un vérin 96 commandable apte à déplacer automatiquement le couvercle 92 entre ses positions ouverte et fermée.

Le réservoir 54 est également basculable entre une position de collecte (représentée sur la figure 3) et une position déversée (représentée sur la figure 4). Dans la position de collecte, le réservoir 54 permet de collecter et de stocker l'herbe coupée rejetée par l'aspirateur 76. Dans la position déversée, le contenu du réservoir 54 est déversé à l'extérieur du porte-outil 50. Pour cela, le porte-outil 50 comporte une articulation 100 permettant au bac 90 de tourner autour d'un axe de rotation parallèle à la direction X. Ici, l'axe de rotation est solidaire de l'extrémité supérieure des ridelles 70 situées à droite sur les figures 3 et 4. Par exemple, l'articulation 100 est une charnière.

Le porte-outil 50 comprend un vérin commandable 102 apte à déplacer automatiquement le réservoir 54 entre sa position de collecte et sa position déversée. L'extrémité inférieure de ce vérin 102 est fixée sans aucun degré de liberté à la plate-forme 58. L'autre extrémité est directement fixée sur la bac 90.

Les figures 5 et 6 représentent plus en détail le berceau 52. Ce berceau 52 est essentiellement formé d'un assemblage de poutrelles et de traverses métalliques. Plus précisément, le cadre vertical 56 comprend :
- une traverse horizontale inférieure 110,
- une traverse horizontale supérieure 112, et
- deux poteaux verticaux 114 et 116 raccordés, chacun d'un côté d'un plan vertical, aux extrémités des traverses 110 et 112.

Ces poteaux 114 et 116 s'étendent essentiellement dans un plan parallèle aux directions Y, Z. La traverse 110 porte les points d'attache 60. La traverse 112 porte le point d'attache central 62 du côté extérieur et les points d'attelage 66 du côté intérieur, c'est-à-dire tourné vers l'intérieur du berceau 52.

Dans ce mode de réalisation, le prolongement 64 est formé par un triangle vertical 118 dont la base est constituée par la traverse 112. Se triangle 118 s'étend vers le haut depuis cette traverse 112. Le sommet de ce triangle 118 porte le point d'attelage 68 tourné vers l'intérieur du berceau 52.

La base des poteaux verticaux 114 et 116 reposent sur des extrémités, respectivement, de deux poutres horizontales 122 et 124. Les poutres 122 et 124 sont mécaniquement raccordées l'une à l'autre, d'un côté, par la traverse 110 et, du côté opposé, par une traverse horizontale 126. Ces poutres 122 et 124 ainsi que les traverses 110 et 126 forment la plate-forme horizontale 58. La longueur des traverses 110, 112 et 126 dans la direction Y est comprise entre 1 m et 1,40 m. Dans cet exemple, cette longueur est égale à 1,22 m.

La longueur des poutres 122 et 124 dans la direction X est comprise entre 1,50 m et 2,50 m. Dans cet exemple, la longueur des poutres 122 et 124 est de 2,20 m dans la direction X.

La partie inférieure des ridelles 70 est directement fixée sans aucun degré de liberté sur une face supérieure des poutres 122 et 124. La distance verticale entre les poutres 122 et 124 et l'extrémité supérieure des ridelles 70 est typiquement comprise entre 90 cm et 1,30 m. Par exemple, ici, cette distance est à égale à 1,10 m. L'espacement entre les extrémités supérieures des ridelles 70 disposées d'un côté du berceau 52 et celles disposées de côté opposé est typiquement compris entre 1,80 m et 2,60 m. Par exemple, dans ce mode réalisation, cet espacement est égal à 2,35 m.

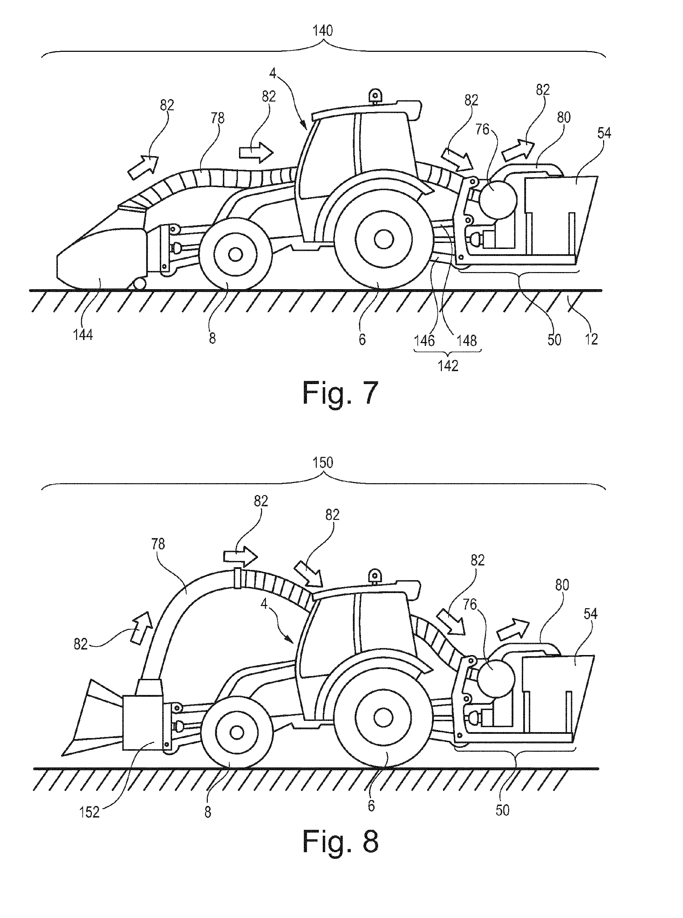

La figure 7 représente une autre configuration possible de l'équipement 2. Dans cette autre configuration, l'équipement 2 forme un équipement 140 de collecte identique à l'équipement 2 sauf que :
- le porte-outil 50 est monté sur l'attelage trois-points arrière 142 du tracteur 4, et
- l'outil 30 de fauchage est remplacé par un autre outil 144 directement monté sur l'attelage trois-points avant 34 du tracteur 4.

L'outil 144 est par exemple ici un outil de fauchage de l'herbe.

L'attelage trois-points arrière 142 est similaire à l'attelage 34 précédemment décrit. Il comporte notamment deux bras de levage inférieurs 146 symétriques l'un de l'autre par rapport à un plan vertical passant par un bras central 148.

La figure 8 représente aussi une autre configuration possible de l'équipement 2. Dans cette configuration, il forme un équipement 150 identique à l'équipement 140 sauf que l'outil 144 de fauchage est remplacé par un broyeur 152 de branches. Dans ce cas, le produit collecté est formé par des résidus de branches broyées ou de tout autre matériau broyé par le broyeur 152.

De nombreux autres modes de réalisation sont possibles. Par exemple, en variante, le cadre vertical 56 s'étend essentiellement dans un plan faisant un angle δ avec un plan vertical, cet angle δ étant compris entre 0 et 30°. De plus, l'angle entre le plan dans lequel s'étend le prolongement 64 et ce plan vertical peut être, quant à lui, compris entre 0 et 45°.

Les trois points d'attelage du porte-outil peuvent être disposés ailleurs que sur le cadre vertical 56. Par exemple, en variante, ils sont disposés sur un autre cadre vertical situé de l'autre côté du réservoir 54 en s'éloignant du tracteur.

Dans une autre variante, les trois points d'attelage du berceau sont remplacés par un ou deux points d'attelage ou au contraire plus de trois points d'attelage.

L'attelage trois-points du tracteur peut être conforme à une autre norme comme l'une des normes ISO 11001-1 : 1993 ou ISO 11001-2 : 1993 ou ISO 11001-3 : 2009 ou ISO 11001-4 : 1994.

Grâce au porte-outil 50 de nombreuses autres configurations de l'équipement de collecte peuvent être réalisée. Par exemple, l'aspirateur 76 est remplacé par tout autre outil capable de rejeter un produit à collecter dans le réservoir 54. A titre d'illustration, l'aspirateur 76 peut être remplacé par un broyeur à bois apte à rejeter des copeaux de bois haché dans le réservoir 54. Il peut être aussi remplacé par un mélangeur-retourneur ou par une pompe à eau. Dans ce dernier cas, le produit collecté est de l'eau.

De plus, il n'est pas nécessaire de fixer un autre outil sur l'autre attelage trois-points du tracteur qui n'est pas utilisé pour transporter le porte-outil 50. En d'autres termes, dans certaine configuration de l'équipement de collecte les outils 30, 144 et 152 peuvent être omis. C'est le cas lorsque l'aspirateur 76 est utilisé pour collecter sur le sol des produits tels que des feuilles ou du papier. L'aspirateur 76 peut aussi être remplacé par un outil qui remplit à la fois la fonction de collecte et de rejet du produit collecté dans le réservoir 54. En particulier, c'est le cas lorsque l'aspirateur 76 est remplacé par un broyeur ou un mélangeur-retourneur.

Les outils 30, 144 et 152 peuvent être remplacés par d'autres outils tels qu'une déchiqueteuse, un broyeur, un mélangeur-retourneur, une épareuse, un lamier ou une élagueuse pour obtenir encore d'autres configurations de l'équipement 2.

Selon la configuration réalisée, le produit collecté peut être un liquide, un produit granulaire tel que du sable ou tout autre matériau susceptible d'être collecté à l'aide d'un des équipements précédemment décrits.

En variante, le porte-outil comporte une autre articulation du côté de la plate-forme 58 opposé à l'articulation 100 pour pouvoir déverser le réservoir 54 d'un côté ou de l'autre de cette plate-forme. Dans ce cas, cette autre articulation est avantageusement symétrique de l'articulation 100. C'est l'utilisateur de l'équipement 2 qui décide de quel côté doit se déverser le réservoir 54 en montant ce réservoir 54 articulé sur l'articulation 100 et, en alternance, sur l'autre articulation. Dans ce cas, l'utilisateur modifie aussi la position des vérins 92 et 96 pour l'adapter à l'articulation utilisée.

## Revendications

1. Équipement de collecte d'un produit comportant :
- un tracteur (4) équipé d'un attelage trois-points (34), l'attelage trois-points comportant deux bras de levage (36) mus par un système hydraulique et un bras central (38), les extrémités de chaque bras de levage étant munies d'un point d'attelage extérieur (40) et l'extrémité du bras central étant munie d'un point d'attelage central (42), ces points d'attelage étant aptes à coopérer avec des points d'attache respectifs d'une attache trois-point d'un outil ou d'un porte-outil à atteler pour fixer cet outil ou ce porte-outil sur l'attelage trois-points,
- le porte-outil (50) suspendu au-dessus du sol (12), ce porte-outil comprenant un berceau (52) équipé :
• d'un cadre (56) dit « vertical »,
• d'une attache trois-points fixée sur ce cadre vertical, cette attache trois-points étant apte à être attelée, de façon détachable, sur l'attelage trois-points du tracteur, cette attache comportant à cet effet deux points d'attache extérieurs (60) et un point d'attache central (62) aptes à être mécaniquement raccordés, respectivement, aux points d'attelage extérieurs et au point d'attelage central de l'attelage trois-points du tracteur, et
• d'au moins un point d'attelage (66, 68), de façon détachable, d'un outil,
- un outil (76) apte à rejeter le produit collecté, cet outil étant fixé audit au moins un point d'attelage du berceau du porte-outil,
- un réservoir (54) de récolte du produit rejeté par l'outil,
**caractérisé en ce que** :
- le berceau (52) comporte également une plate-forme (58), fixée sans aucun degré de liberté au cadre vertical (56) et s'étendant en porte-à-faux au-dessus du sol à partir de ce cadre, et
- le porte-outil (50) comporte le réservoir (54) de récolte reçu à l'intérieur d'un logement (72) formé dans cette plate-forme et supporté au-dessus du sol uniquement par cette plate-forme.

2. Berceau pour un équipement conforme à la revendication 1, ce berceau étant équipé :
- d'un cadre (56) dit « vertical »,
- d'une attache trois-points fixée sur ce cadre vertical, cette attache trois-points étant apte à être attelée, de façon détachable, sur l'attelage trois-points du tracteur, cette attache comportant à cet effet deux points d'attache extérieurs (60) et un point d'attache central (62) aptes à être mécaniquement raccordés, respectivement, aux points d'attelage extérieurs et au point d'attelage central de l'attelage trois-points du tracteur, et
- d'au moins un point d'attelage (66, 68), de façon détachable, de l'outil apte à rejeter le produit collecté,
**caractérisé en ce que** le berceau comporte également une plate-forme (58), fixée sans aucun degré de liberté, au cadre vertical (56) et s'étendant en porte-à-faux à partir de ce cadre, cette plate-forme comportant un logement (72) apte à recevoir le réservoir de récolte du produit rejeté par l'outil, et cette plate-forme étant apte à supporter, à elle-seul, ce réservoir au-dessus du sol.

3. Berceau selon la revendication 2, dans lequel chaque point d'attelage (66, 68) est directement fixé sans aucun degré de liberté sur le cadre vertical (56).

4. Berceau selon l'une quelconque des revendications 2 à 3, dans lequel le berceau comporte au moins trois points d'attelage (66, 68) disposés les uns par rapport aux autres de la même manière que les trois points d'attelage de l'attelage trois-points du tracteur et aptes à permettre la fixation de l'outil directement sur ces trois points d'attelage du berceau et, en alternance, la fixation de ce même outil directement sur les trois points d'attelage de l'attelage trois-points du tracteur.

5. Berceau selon la revendication 4, dans lequel la plate-forme (58) s'étend principalement dans un plan appelé « plan de la plate-forme » et les trois points d'attelage (66, 68) sont décalés, dans une direction perpendiculaire au plan de la plate-forme, de sorte qu'au moins deux des points d'attelage (66, 68) soient au niveau ou au-dessus du point d'attache central (62) du berceau.

6. Porte-outil pour un équipement de collecte conforme à la revendication 1, **caractérisé en ce que** ce porte-outil comporte :
- un berceau (52) conforme à l'une quelconque des revendications 2 à 5, et
- le réservoir (54) de récolte du produit rejeté par l'outil, reçu à l'intérieur du logement formé dans cette plate-forme, apte à être supporté au-dessus du sol uniquement par cette plate-forme.

7. Porte-outil selon la revendication 6, dans lequel le réservoir (54) est mécaniquement raccordé à la plate-forme par l'intermédiaire d'une articulation (100) apte à permettre le basculement du réservoir entre :
- une position de collecte dans laquelle le réservoir collecte le produit rejeté par l'outil, et
- une position déversée dans laquelle le contenu du réservoir est déversé à côté de la plate-forme.

8. Porte-outil selon la revendication 7, dans lequel le berceau comporte des ridelles (70) s'étendant depuis la plate-forme et délimitant le logement (72) dans lequel est reçu le réservoir, et l'articulation (100) permettant le basculement du réservoir est fixée sur l'extrémité libre des ridelles situées au moins d'un même côté de la plate-forme.

9. Porte-outil selon les revendications 7 ou 8, dans lequel le berceau comporte au moins un vérin (102) apte à déplacer automatiquement le réservoir entre sa position de collecte et sa position déversée.

10. Porte-outil selon l'une quelconque des revendications 6 à 9, dans lequel le réservoir comporte :
- un couvercle (92) déplaçable entre une position fermée dans laquelle le produit contenu dans le réservoir ne peut pas être déversé et une position ouverte dans laquelle le produit contenu dans le réservoir peut être déversé, et
- au moins un vérin (96) apte à déplacer automatiquement le couvercle entre ses positions ouverte et fermée.
